# EUROPEAN PATENT SPECIFICATION

(11) **EP 3 619 368 B1**
(45) Date of publication and mention of the grant of the patent: **05.07.2023**
(21) Application number: 18727157.2
(22) Date of filing: 03.05.2018
(51) Int. Cl.: E03B 1/04, E03C 1/00, E03C 1/244

(54) **DRAIN VALVE DEVICE FOR A DRAIN OF A SHOWER FLOOR AND METHOD FOR CONTROLLING A WATER LEVEL OF SUCH SHOWER FLOOR**
ABLAUFVENTILVORRICHTUNG FÜR EINEN ABLAUF EINES DUSCHBODENS UND VERFAHREN ZUR STEUERUNG DES WASSERPEGELS EINES SOLCHEN DUSCHBODENS
DISPOSITIF DE SOUPAPE DE VIDANGE POUR UNE VIDANGE D'UN PLANCHER DE DOUCHE ET PROCÉDÉ DE CONTRÔLE DU NIVEAU D'EAU D'UN TEL PLANCHER DE DOUCHE

(30) Priority: 03.05.2017 EP 17169242
(43) Date of publication of application: 11.03.2020
(73) Proprietor: FLOW-LOOP ApS, 3450 Allerød (DK)
(72) Inventor: KOLFF, Simon, 1660 Copenhagen V (DK); BIGEJ, Jalen, 3450 Allerød (DK)
(74) Representative: Guardian IP Consulting I/S
(86) International application number: PCT/EP2018/061410
(87) International publication number: WO 2018/202807

(56) References cited:
- DE-U1- 29 623 318
- FR-A- 762 406
- FR-A1- 2 899 609
- GB-A- 2 333 700
- US-A- 2 560 954
- US-A- 4 224 700

## Description

The present invention relates to a drain valve device for a drain of a shower floor of a water recirculation shower system and to a method for controlling a water level of such shower floor. Furthermore, the present invention relates to a water recirculation shower system comprising such drain valve device.

When using a conventional shower system, water is being provided from a water supply via a showerhead to the person taking a shower. Usually there is a mix of supplied hot and cold water in order to deliver water of a desired temperature. This water from the showerhead is, after having showered the person, lead via a shower floor to a drain. The used shower water entering the drain usually has a temperature being close to what is being provided by the showerhead. Accordingly, there is a large potential for recovering energy for hot showers and for reuse of relatively clean water for any shower - i.e. hot or cold.

It is known to provide a water recirculation shower system wherein at least a part of the water used for the shower is being recirculated. The recirculated water is usually being filtered and/or cleaned and/or purified in some other way before being provided again to the person taking a shower via a showerhead. The recirculated water may be temperature adjusted, e.g. by heating or by provision of small amount of non-circulated water during the process. The provided non-circulated water is usually water being warmer than the recovered water. The provided non-circulated water is usually also warmer than the desired temperature of the shower water to be provided by the shower head. This is done in order to maintain/regulate a desired temperature since the water from the shower usually is cooled down during transit from the showerhead to being recirculated.

It is known from publications such as US 2009 0300839, EP 2818598 A1, and WO 2015115999 A1 to provide water recirculation shower systems wherein a water reservoir is provided below the level of the shower floor. Accordingly, the shower floor leads water to the reservoir during use. By means of such water reservoir, water is recirculated by means of a pump back to the showerhead for being provided to the user. These solutions are described by means of dedicated shower floors, which may be provided on top of an existing shower floor when retro-fitting the water recirculation shower system to an existing conventional shower system. This may be an expensive and undesired installation in an existing shower space.

US7854852 discloses another water recirculation shower system which may be provided as a retrofit solution, wherein water from the drain is utilized for recirculation. However, water that has been in contact with the drain, such as a drain trap thereof, may be regarded as less suited for recirculating in a shower due to undesired odours and/or high levels of bacteria growth, even though these undesired aspects may be dealt with by the water recirculation shower system. A drain trap may also be known as: a water trap, a drain siphon, an inverted siphon, or a U-bend.

GB2333700A discloses a waste fitting for a shower tray or the like, comprising a body adapted to be fitted in an aperture in the shower tray and to be connected to a water outlet, and a control member having an upper part extending above said body and affording an inlet for flow of water from the shower tray, and a lower part which cooperates with said body to provide for flow to said outlet.

FR2899609A1 discloses a shower device for e.g. domestic use combining, on the one hand, a housing comprising a turbine actuated by the pressure of the network supplying the installation and driving a centrifugal pump sucking the water from the bottom of the tray to send it to the shower head, and/or to spray nozzles, via a riser pipe provided for this purpose and, on the other hand, a multiway valve operated by the user, mounted as a bypass on the pipe supplying the shower head and allowing either the said shower head to be supplied from the network, or the water from the network to be sent to the turbine.

There is a need in the industry to overcome the above-mentioned and other shortcomings of existing recirculating shower systems.

According to a first aspect of the present invention there is provided a drain valve device configured for a drain of a shower floor of a water recirculation shower system comprising a pump inlet above the shower floor, according to independent claim 1.

A shower floor may also be denoted:
shower tray, shower space, or shower base. The drain valve device comprises an impeding part, an overflow drain part and a base part.

The impeding part is configured to be movable in relation to the drain between: a closed position, wherein a direct drain impediment is formed at or below a drainage level being defined by a part of the shower floor next to the drain, and an open position, wherein the direct drain impediment is not formed. The impeding part being configured to be movable in relation to the drain may be understood such that when the drain valve device is installed in and/or fixed to/within the drain, the impeding part is movable, such as being vertically moveable, in relation to the drain. The overflow drain part comprises one or more outlet apertures. The one or more outlet apertures are configured to provide communication from the shower floor to the drain. The one or more outlet apertures are configured to be provided at an elevation of between 3 and 30 mm in relation to a pump suction inlet area of the shower floor when the impeding part is in the closed position. The elevation of the one or more outlet apertures may be of a predefined level, at least when the impeding part is in the closed position. Provision of the one or more outlet apertures at an elevation, i.e. higher, with respect to the pump suction inlet area enables provision of a water reservoir at the pump suction inlet area.

The pump suction inlet area may refer to any one or more parts or points or areas of the shower floor being directly under the pump inlet of the water recirculation shower system according to the present invention.

The pump suction inlet area may be non-flat and/or not in level. For instance, the shower floor, e.g. including the pump suction inlet area, may incline towards the drain. The slope or inclination of a shower floor towards the drain may for instance be around 2%, such as corresponding to a drop of 1 cm for every 50 cm horizontal distance. The extent of the pump suction inlet area as measured in a direction towards the drain may be relatively small, e.g. less than 5 cm. Accordingly, the elevation difference of the pump suction inlet area having a slope of 2% may be around 1 mm or less. When referring to an elevation of between 3 and 30 mm in relation to a pump suction inlet area of the shower floor, reference may e.g. be given to any of: the lowest point, the highest point, the point having the average height, or any other point of the pump suction inlet area of the shower floor.

The drain valve device may be configured such that the one or more outlet apertures are provided at an elevation of at least 3 mm, such as at least 5 or 10 mm, in relation to a pump suction inlet area of the shower floor when the impeding part is in the closed position and when the drain valve device is situated and/or installed at a drain of a shower floor. It is necessarily to provide a certain level of water at the pump suction inlet area in order for the pump inlet to operate as desired.

The drain valve device may be configured such that the one or more outlet apertures are provided at an elevation of less than 30 mm, such as less than 25 or 20 mm, in relation to a pump suction inlet area of the shower floor when the impeding part is in the closed position and when the drain valve device is situated and/or installed at a drain of a shower floor. It may be desired to provide a water reservoir that is not too deep, since the person taking a shower usually is standing in part of the reservoir. Accordingly, it may be desired to keep the reservoir as low as possible while still enabling the pump inlet to operate as desired.

The desired elevation of the one or more outlet apertures may depend on the sloping of the shower floor between the drain valve device and the pump suction inlet area.

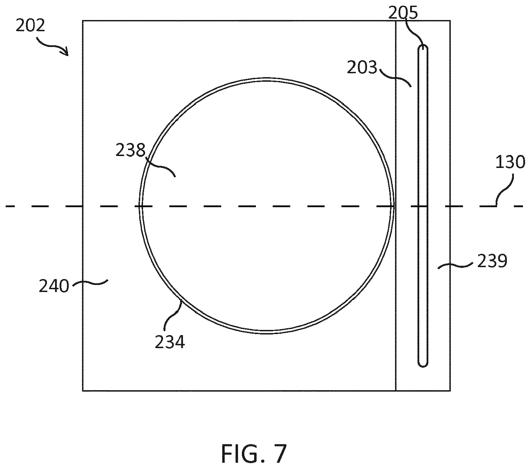

According to a further aspect of the present invention there is provided use of a drain valve device according to the present invention and a shower floor for provision of a water reservoir, such as a temporary and low-level water reservoir. The term "temporary" may be understood such that the water reservoir may be created and/or maintained while the impeding part is in the closed position and/or caused by the impeding part entering the closed position. The water reservoir may have a height of between 3 and 30 mm at the pump suction inlet area during recirculation operation. The height of the water reservoir may be defined by the height/elevation of the one or more outlet apertures of the overflow drain part at least when the impeding part is in the closed position, but, e.g. depending on the given embodiment, not necessarily only when the impeding part is in the closed position, cf. e.g. Figs. 7-9.

It may be advantageous that the water reservoir has a height of at least 3 mm, or at least a higher height, such as at least 5 mm, at the pump suction inlet area for enabling that the pump of the water recirculation shower system may operate optimally and/or as desired, e.g. in order for the pump inlet not to take in air or not to take in too much air. It may be advantageous that the water reservoir has a height of at most 30 mm or less at the pump suction inlet area for alleviating/preventing that too much water is used for creating the water reservoir used for the recirculation and/or for alleviating/avoiding that the user is standing in too much water e.g. water covering the feet of the user, which may be undesired.

The level/height of the water reservoir may be predefined, e.g. to a level slightly above, such as 1 mm above, or such as 3mm above, the height required by the pump inlet to perform smoothly without taking in air or too much air, e.g. even when there is movement in the water and thereby waves disturbing/altering the water level of the water reservoir.

According to a further aspect of the present invention there is provided a water recirculation shower system comprising: a drain valve device according to the present invention, and a water recirculation shower unit, e.g. comprising a panel, comprising a pump inlet at the pump suction area of the shower floor. The water recirculation shower unit forms part of the water recirculation shower system.

According to a further aspect of the present invention there is provided a method for controlling water level of a shower floor of a water recirculation shower system comprising a pump inlet above the shower floor, according to independent claim 13. The method comprises impeding water entering the drain by means of an impeding part of a drain valve device, such that the water level is forced to raise in order for the water to enter the drain via an overflow drain part provided at an elevation of between 3 and 30 mm in relation to a pump suction inlet area of the shower floor. The elevation may be at a predefined level, e.g. a level being slightly above the intake level of the pump inlet.

Controlling the water level of a shower floor of a water recirculation shower system may comprise and/or may consist of any one or more of the following: provision of a water reservoir at the shower floor, maintaining a water reservoir at the shower floor, and removal of a water reservoir at the shower floor. The water reservoir may cover the pump suction inlet area of the shower floor.

Accordingly, there is provided a drain valve device, a water recirculation shower system, and method for controlling water level of a shower floor of a water recirculation shower system, which enables recirculation of a volume of water provided temporarily between the level of the overflow drain part and the level of the pump suction inlet area.

The present invention solves the problem by enabling provision and maintenance of a temporary and low-level water reservoir using the shower floor for accumulating used shower water to be recirculated. Temporary may be understood as during recirculation operation and for provision/generation of such reservoir. Low-level may be such as between 3 mm and 30 mm.

By means of the drain valve device of the present invention, a water reservoir may be provided immediately upon activation of the drain valve device. Activation may be understood as movement of the impeding part to the closed position, whereby a reservoir for recirculation may be provided.

The one or more overflow outlets may enable the excess of added shower water to be drained from the temporary reservoir provided using the shower floor, such that the water level cannot flow above the level of these one or more overflow outlets. Accordingly overflow of the area surrounding the shower floor may be avoided.

Accordingly, the one or more overflow outlets may enable continuous replacement of the water being circulated by the water recirculation shower system by continuously adding an amount of water, such as warm water, to the recirculation, whereby the same amount of water being added will automatically be discharged via the one or more overflow outlets.

By means of the drain valve device of the present invention, a water reservoir may be emptied by de-activation of the drain valve device in order to let the shower floor dry after use. De-activation may be understood as movement of the impeding part from the closed position to the open position.

Since the present invention may provide a solution being configured to provide a reservoir provided in part by a shower floor such as an existing shower floor, the present invention may be provided as a retro-fit solution for such existing shower floors, e.g. such as tiled shower floors.

The present invention may enable an elevated drain outlet integrated on a protruding drain cover's top at a certain, e.g. predefined, level above floor level, e.g. such that when a push-down function of the drain cover is actuated during showering, the invention may provide accumulation of an amount of water on the shower floor, i.e. creating a reservoir, sufficient for e.g. a self-priming pump to recover at least part of the shower water for recirculation via a pump inlet provided immediately above the shower floor. The push-down function of the drain cover may for instance be actuated by a user's foot, e.g. for pressing down, e.g. on the drain cover.

A push-down function or a push-actuation according to the present invention may be understood as a "push-down and pop-up function". Such may e.g. be known from a "push down pop up drain" or similar.

A push-down function and/or a push-actuation as provided according to the present invention may provide the advantage of enabling an instant transition, or at least substantially instant transition, between two states, i.e. the open position and the closed position of the impeding part. This may alleviate use of the drain valve device according to the present invention.

Accordingly, a push-down function and/or a push-actuation of the impeding part as provided according to the present invention may enable improved control of the water level of the shower floor of a water recirculation shower system.

The present invention may facilitate an alternative and/or cost effective solution for lowering consumption of any one or more of the following during usage of the present invention: hot water, water, and energy. Lowering consumption of hot water and/or energy may in particular be facilitated for hot-shower-situations, i.e. situations, where the provided temperature and/or the desired temperature of the shower water is higher than the temperature of any provision of cold water to the shower system.

The present invention relates to different aspects including the apparatus described above and in the following and to corresponding methods, such as described above and in the following. Each aspect may yield one or more of the benefits and advantages described in connection with one or more of the other aspects, and each aspect may have one or more embodiments with all or just some of the features corresponding to the embodiments described in connection with one or more of the other aspects as disclosed in the appended claims.

Other systems, methods and features of the present invention will be or become apparent to one having ordinary skill in the art upon examining the following drawings and detailed description.

### Brief description of the drawings

The above, as well as additional objects, features and advantages of the present inventive concept, will be better understood through the following illustrative and nonlimiting detailed description of preferred embodiments and/or features of the present inventive concept, with reference to the appended drawings, where like reference numerals may be used for like elements.

The accompanying drawings are included to provide a further understanding of the invention, and are incorporated in and constitute a part of this specification. The drawings illustrate embodiments of the invention and, together with the description, serve to explain the principles of the invention.

Other and further aspects and features may be evident from reading the following detailed description of the embodiments.

The drawings illustrate the design and utility of embodiments, in which similar elements may be referred to by common reference numerals. These drawings are not necessarily drawn to scale. In order to better appreciate how the above recited and other advantages and objects are obtained, a more particular description of the embodiments will be rendered, which are illustrated in the accompanying drawings. These drawings may only depict typical embodiments and may therefore not be considered limiting of its scope.
Fig. 1 schematically illustrates an embodiment of a water recirculation shower system according to the present invention.
Figs. 2-6 schematically illustrate a first embodiment of a drain valve device according to the present invention.
Figs. 7-9 schematically illustrate a second embodiment of a drain valve device according to the present invention.
Figs. 10 - 12 schematically illustrate a third embodiment of a drain valve device according to the present invention.
Fig. 13 schematically illustrates a cross-sectional side view of a pump inlet of a water recirculation shower system according to the present invention.
Fig. 14 schematically illustrates a top view of a part of the third embodiment of the drain valve device according to the present invention wherein the overflow drain part is omitted.
Figs. 15 - 16 schematically illustrate a cross sectional side view of an embodiment of a movement mechanism for a drain valve device according to the present invention.

### Detailed description

Recirculation of water using a water recirculation shower system may be denoted recirculation mode.

Regarding the provided elevation of the one or more outlet apertures with respect to the pump suction inlet area, it is important that the elevation is high enough to provide a sufficiently high water level of the reservoir for the pump inlet to operate as desired. Furthermore, since the user usually will be standing in the reservoir, it may be desired that the water level is not higher than acceptable by the user, as well as not unnecessarily increasing water waste by creating a high volume reservoir. Furthermore this water level is also restricted by the floor level of the space surrounding the shower floor and/or any surrounding protrusion, e.g. formed by the edges of a shower tray.

The one or more outlet apertures may be configured to be provided at an elevation of at least 4 or 5 mm in relation to the pump suction inlet area of the shower floor when the impeding part is in the closed position. This may be to enable an improved, e.g. uninterrupted, operation of the pump inlet.

The drainage level may be defined as a horizontal plane comprising the part of the shower floor next to the drain, which part of the shower floor usually is sloping towards the drain. The drainage level may be and is usually the lowest point of the shower floor.

The pump suction inlet area of the shower floor may be an area of the shower floor from where water is being pumped for provision of recirculation during use of the water recirculation shower system.

The water recirculation shower system according to the present invention may be provided such that the pump suction inlet area of the shower floor is near, such as less than 10 cm from and/or abutting, one or more shower walls. This may e.g. be to keep the shower floor clear of obstacles and/or to alleviate such obstacles. A shower wall may be understood as a wall abutting and/or being part of outlining the shower floor.

The direct drain impediment may be configured to impede water entering the drain directly from the drainage level.

The open position of the impeding part may be provided such that water is being less impeded from entering from the level of the shower floor next to the drain and into the drain. The level of the shower floor next to the drain may be denoted the drainage level. The impeding part may be configured to allow water to enter the drain from the level of the shower floor next to the drain when the impeding part is in the open position.

The shower floor or shower floor area may be defined as the area where the person taking a shower is assumed to be standing during normal use and/or usually is standing when taking a shower. However, during normal use, the user may as well also be standing at least partly on top of the drain valve device.

The drain valve device may be understood as forming part of the shower floor area.

The drain may be a part, where the person taking a shower is assumed not to be standing during normal use.

The shower floor may be inclining towards the drain.

The shower floor may be delimited by edges having a higher level than the one or more outlet apertures.

The drain valve device may be configured to create a temporary low-level reservoir for the water recirculation shower system.

The drain valve device may comprise a top part forming the one or more outlet apertures. The one or more outlet apertures may be configured to be provided at a top part of a cover plate, such as a push-actuateable cover. The one or more outlet apertures may be provided at the most elevated part of the drain valve device during use. This may have an advantage of forming the least elevated obstruction of the shower floor area.

The direct drain impediment may be configured to form a watertight seal. However, this may not be needed for the invention to work. It may even be an advantage that the direct drain impediment enables a small flow of water to pass in order to allow accumulated water on the shower floor to be drained in case the impeding part is not put in the open position after use, e.g. in case the user forgets to do so. A small flow of water may e.g. be less than 1dL/min.

The direct drain impediment may be configured for enabling a flow of less than 5 L water per minute, such as less than 2 L per minute, such as less than 0.5 L per minute, from the drainage level of the shower floor.

The drain valve device is configured to fit at, i.e. such as on top of and/or within, the drain of the water recirculation shower system.

The direct drain impediment may be formed between the impeding part and the base part of the drain valve device, e.g. formed by having a part of the impeding part touching a part of the base part and/or forming a sufficiently narrow passage between these parts when the impeding part is in the closed position. Accordingly, it may be an advantage that at least one of the impeding part and the base part comprises an elastic part.

The impeding part is configured to be moveably within and/or attached to the base part. The base part may be provided with a first part being wide enough to surround the impeding part while the impeding part is in level with the first part of the base part, such that a sufficient flow of water may be directed between the impeding part and the base part. The impeding part may be in the open position when being in level with the first part of the base part. Furthermore, the base part may be provided with a second part, such as a protruding part, being sufficiently narrow to close-fit or substantially close-fit the impeding part when the impeding part is in level with the second part of the base part. The impeding part may be in the closed position when being in level with the second part of the base part. The base part may form a gradual or abrupt narrowing from the first part towards the second part.

The impeding part may comprise or may be made entirely of a flexible and/or elastic material such as rubber or silicone. The impeding part may comprise or consist of an O-ring.

The overflow drain part may for instance comprise or may for instance be made of: stainless steel, aluminium, or plastic. All parts of the drain valve device, e.g. except the impeding part, may for instance comprise or be for instance made of stainless steel, aluminium, or plastic).

The drain valve device comprises a base part configured to fit at an opening of the drain. The impeding part is moveably attached to the base part. The base part may be configured to be attached to the drain. This may for instance be carried out once existing drain cover or grate is removed. The base part is configured to be provided at least partly within the drain. Movement of the impeding part between the closed position and the open position may be push-actuateable. This may enable a convenient method for opening and closing the drain valve, and e.g. thereby activate or deactivate recirculation, e.g. by pressing on the impeding part with a foot of the user.

Actuation, such as push-actuation, of the impeding part may be an indirect actuation, wherein a part of the drain valve device, which part is different from the impeding part and is connected to the impeding part, is directly touched, whereby the impeding part is actuated. Actuation may be initiated by pressing down. Actuation may be by means of a user's foot. The part of the drain valve device, which part is different from and connected to the impeding part, may be a cover part of the drain valve device. The part of the drain valve device, which part is different from and connected to the impeding part, may be rigidly connected to the impeding part.

The water recirculation shower system according to the present invention may be configured for initiation of recirculation dependent on available level of water at the pump inlet, e.g. as sensed by a water sensor of the water recirculation shower system. Recirculation may for instance be initiated by means of the water sensor being configured to detect whether a level of water has reached a desired and/or required level for the pump inlet to operate and/or to operate as desired. The water sensor may comprise electronic and/or mechanical components. The water sensor may be in communication with desired components of the recirculation system, such as the water pump. Accordingly, the pump may be activated and the recirculation mode may be activated based on input from the water sensor. Likewise, recirculation mode may be deactivated, e.g. by means of the above-mentioned sensor, in case the drain valve device is opened and thereby the detected water level drops below a threshold level, e.g. a required level for the pump inlet to operate optimally, e.g. in order not to cause undue noise.

The water sensor, or the system as such, may have a delay, such as 1 second, or such as 3 seconds, for activating the pump. This may e.g. be to disregard momentary water movement and/or fluctuating water levels.

The water sensor may comprise a capacitive sensor.

The drain valve device may comprise a movement mechanism configured to allow translational movement of the impeding part relative to the base part upon push-activation of the impeding part. The base part may comprise a base rim part configured to be provided at the drainage level. The base rim part may comprise an upper surface configured to be in level with the part of the shower floor being next to the drain.

A translational movement of the impeding part relative to the base part may consist of and/or comprise vertical motion, e.g. when the drain valve device is installed in and/or fixed to a drain of a water recirculation shower system according to the present invention.

The drain valve device may be push-actuateable by means of a movement mechanism enabling push-down and pop-up. Such, or similar, movement mechanism are for instance known to be used for a plug for a drain of a sink or bathtub as well as known to be used for preventing odour from shower drain - the latter being in particular if the drain does not include a drain trap or siphon. Push-actuateable solutions are for instance known from US3366980, US3428295, and US4447918, e.g. described as or forming part of a pop-up drain fitting.

The movement mechanism of the drain valve device according to the present invention, which movement mechanism may enable push-down and pop-up, may enable vertical and/or linear displacement / motion.

Communication from the shower floor to the drain may be provided under the impeding part when the impeding part is in the open position. Accordingly, the drain valve device may be configured such that water from the shower floor may flow under the impeding part and into the drain when the impeding part is in the open position. This facilitates a complete drain of the temporary low-level water reservoir created on the shower floor to allow recirculation and maintains the option to use the shower floor for showering without recirculation.

When the impeding part is in the open position, communication from the shower floor to the drain is provided between the impeding part and the base part of the drain valve device. This may facilitate a complete drain of the temporary low-level water reservoir created on the shower floor to allow recirculation and maintains the option to use the shower floor for showering without recirculation.

The drain valve device may be configured such that the movement mechanism is extended when the impeding part is in the closed position and compressed when the impeding part is in the open position, or vice versa. The drain valve device may be configured such that, when the drain valve device is fixed to a drain, the overflow drain part is in an elevated/raised position when the movement mechanism is extended and in a lowered position when movement mechanism is compressed. Accordingly, the drain valve device may be configured such that, when the drain valve device is fixed to a drain, the overflow drain part is in an elevated/raised position when the impeding part is in the closed position and the overflow drain part is in a lowered position when the impeding part is in the open position, or vice versa.

Provision of a drain valve device, wherein the overflow drain part is in an elevated position when the impeding part is in the open position may provide an improved incentive for a user to activate the recirculating shower mode by stepping on (i.e. pushing) the drain cover to make it less of an obstacle on the floor while showering. Accordingly, the drain valve device may provide an improved "nudging", thereby encouraging the user to step on (i.e. activate) the drain and thereby switch to the recirculation mode.

Provision of a drain valve device, wherein the overflow drain part is in a lowered position when the impeding part is in the open position may be that the overflow drain part may be less of an obstacle on the shower floor during normal shower use and/or less of a visual distraction in the bathroom when the shower is not in use for recirculation.

The impeding part and the overflow drain part may be rigidly connected to each other and/or may be formed in one piece. Alternatively, the impeding part and the overflow drain part may be moveably connected to each other, e.g. via the base part, such that the overflow drain part is rigidly connected to the base part.

The overflow drain part may be configured to drain at least 2 L water per minute from the shower floor. This may ensure that the temporary reservoir is kept at a desired level in case a low flow, e.g. 1-3L/min, of hot water is added to the water recirculation shower system. During recirculation operation there may be an addition of warm/hot water to the system, such as an addition of 1-2 L per minute, or more. Addition of warm/hot water may provide that the recirculated water does not need to be heated, or needs to be heated less than if the warm/hot water was not added. Addition of water as such provides some degree of renewal of the water being used for recirculation. This may be beneficial for the sewer system as well as for maintaining a drain trap, which may be provided at the drain. It may be preferred that the overflow drain part is configured for a drainage capacity of at least the same or more than the intended net addition of water during recirculation operation. The showerhead of the recirculating shower system may be configured to provide a flow of 15L/min. The overflow drain part may be configured to drain at least 20L/min. This may for instance be in case of a leaking shower hose.

A continuous replacement/renewal of the water being circulated by the water recirculation shower system may be advantageous for different reasons. For instance, by allowing dirt and/or soap floating in the surface of the water reservoir to enter the drain via the one or more overflow outlets, the purification process of the water to be circulated may be alleviated since less dirt may reach the pump inlet.

The impeding part may comprise or may be provided as an impeding rim part. The impeding part may comprise or may be provided as an annular part.

It may be desired to have the impeding part entering the closed position after water has been provided by the showerhead for a while. This may be in order for the water to reach a certain temperature. Furthermore, it may be desired to flush the first part of the shower water to the drain, since this first part may contain more dirt.

It may be desired to avoid vertical stands, such as cylindrical standpipes, protruding from a part of the drain valve device since such vertical stands may be an obstacle for a user.

It may be an advantage to provide an ergonomic top surface of the drain valve device since such may be less of an obstacle to trip over compared to other solutions.

It may be an advantage that at least a top part of the drain valve device is asymmetric, e.g. with a flat side and a slope towards the one or more outlet apertures provided at the one side, which side may be configured to be situated as far away from the user as possible, e.g. towards a wall next to the shower floor.

The overflow drain part may be configured asymmetrically with a small slope on one side and a steeper slope on the other side, e.g. of no more than 45 degrees, to make the overflow drain part ergonomic for the feet and less of an obstacle to trip over on the shower floor. The sloping may be more than 45 degrees, but this may make the overflow drain less ergonomic.

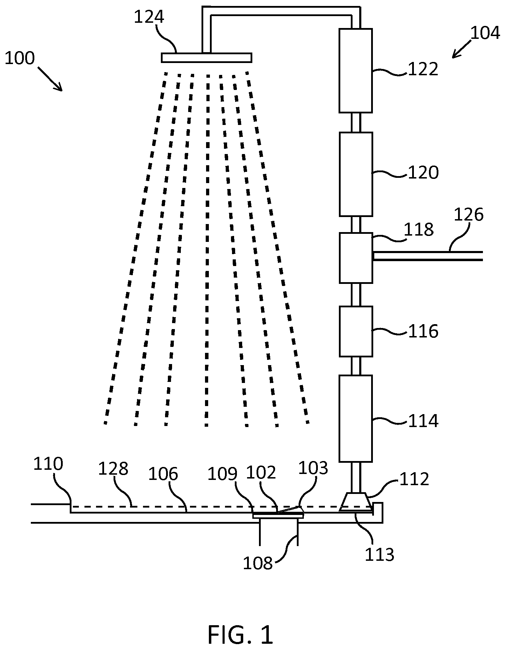

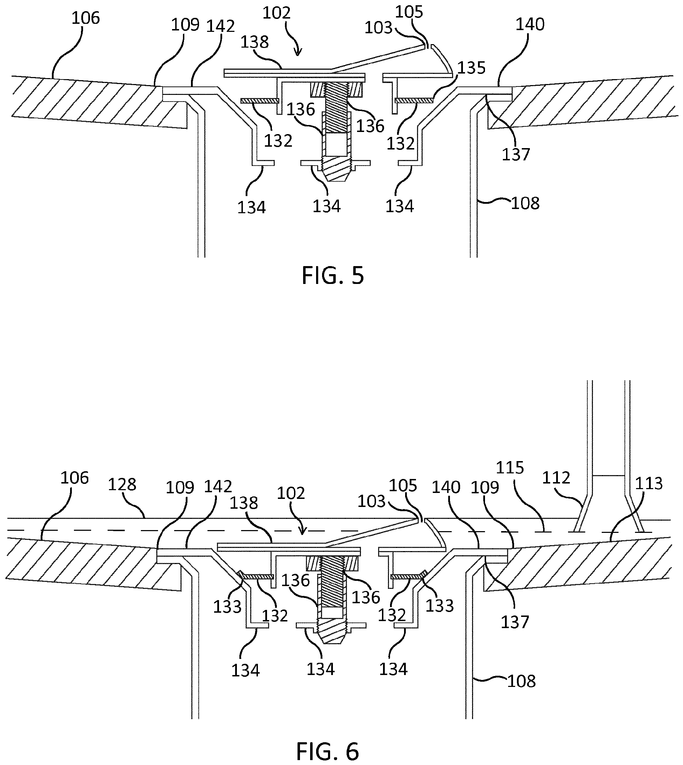

Fig. 1 schematically illustrates an embodiment of a water recirculation shower system 100 according to the present invention. The system 100 comprises: a drain valve device 102, a water recirculation shower unit 104, a shower floor 106, and a drain 108. The drain valve device 102 comprises: an impeding part (cf. ref. 132 of Figs. 5 and 6) and an overflow drain part 103.

The shower floor 106 is outlined by an edge 110 at the perimeter of the shower floor 106. However, in other embodiments according to the invention, the shower floor does not necessarily comprise such defined perimeter, e.g. provided that the shower floor's sloping is sufficient to allow the desired water level on the floor.

The water recirculation shower unit 104 comprises: a pump inlet 112, e.g. comprising a hair screen, a micro filter 114, a self-priming pump 116, a mixer valve 118, a water heater 120, a UV treatment unit 122, and a showerhead 124. The water recirculation shower unit 104 furthermore comprises interconnecting tubing. The water recirculation shower unit 104 may furthermore comprise fittings, solenoid valves, sensors and a programmable control unit (micro controller). The showerhead 124 may be considered not to form part of the recirculating shower unit 104. The mixer valve 118 is connected to a water supply 126, such as hot and/or cold water supply. The water heater 120 may be optional, e.g. in case the water supply 126 is capable of supplying sufficiently hot water, the water heater 120 may be redundant and not needed. The UV treatment unit 122, i.e. a unit configured for treatment by UV light, may be for purification of the recirculated water. Purification may comprise killing undesired living organisms. Since the water being supplied to the unit 104 via the mixer valve 118 may be considered to be clean, it may be advantageous to provide the unit 122 prior to the valve 118, such as between the pump 116 and the valve 118.

The pump inlet 112 may comprise a pre-filter mesh screen e.g. of 100 micron, e.g to prevent e.g. hair entering the water recirculation shower unit 104. The water recirculation shower unit 104 may comprise a water sensor, e.g. as described in the present disclosure.

The impeding part 132 of the drain valve device 102 is configured to be movable in relation to the drain 108 between: a closed position (cf. Fig. 6), wherein a direct drain impediment 133 is formed below a drainage level being defined by a part 109 of the shower floor 106 next to the drain 108, and an open position (cf. Fig. 5), wherein the direct drain impediment is not formed.

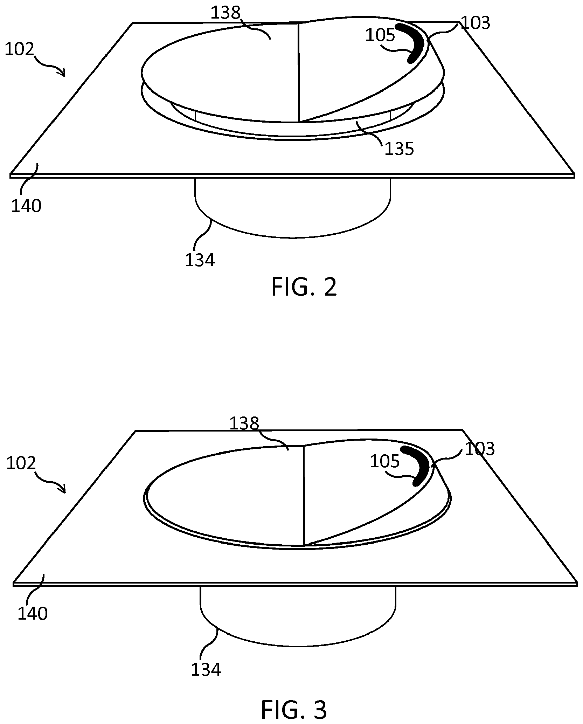

The overflow drain part 103 comprises one or more outlet apertures (cf. ref. 105 of Figs. 2-6) being configured to provide communication from the shower floor 106 to the drain 108 and being configured to be provided at an elevation of between 3 and 30 mm in relation to a pump suction inlet area 113 of the shower floor 106 when the impeding part 132 is in the closed position.

The system 100 as illustrated in Fig. 1 is illustrated during recirculation mode, wherein the impeding part of the drain valve device 102 is in the closed position. Accordingly the water level 128 of the shower floor 106 is controlled by impeding water entering the drain 108 by means of the impeding part, such that the water level 128 is forced to raise in order for the water contained by the shower floor 106 to enter the drain 108 via the overflow drain part 103, which is provided at an elevation of between 3 and 30 mm in relation to the pump suction inlet area 113 of the shower floor 106.

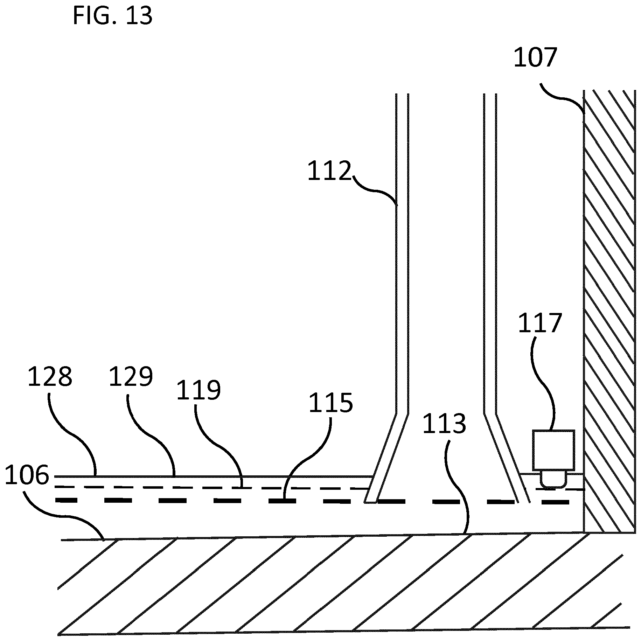

In order for the system 100 to enter the recirculation mode, the impeding part must be in the closed position. This may enable a temporary low-level water reservoir to be provided. When the water level 128 of the reservoir has increased to a determined level (cf. ref. 115 on Fig. 6) at the pump inlet 112, water from the reservoir may be recirculated via the pump inlet 112 towards the shower head 124. Recirculation may for instance be initiated by means of a sensor (cf. ref. 117 on Fig. 13) detecting that the level of the water 128 has reached the level 115. For instance, as illustrated by means of Fig. 13, a sensor, i.e. water sensor, may be configured to detect that the water level 128 has not only reached the level 115, but has exceeded the level 115 with a desired amount corresponding to the level 119 (cf. Fig. 13). Such sensor may be provided by an electronic and/or mechanical component. Such sensor may be in communication with desired components of the recirculation system, such as the water pump 116. Accordingly, the pump 116 may be activated and the recirculation mode may be active.

Likewise, recirculation mode may be deactivated, e.g. by means of the above-mentioned sensor, in case the water level 128 drops below the needed level 115 (or the level 119 as explained in the present disclosure) for the pump inlet to operate optimally, e.g. in order not to cause undue noise. Such undue noise may otherwise be caused by air entering the pump and propagating further through the recirculation shower system.

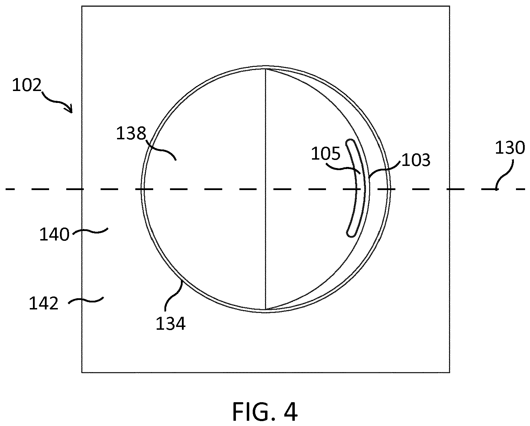

Figs. 2-6 schematically illustrate a first embodiment of a drain valve device 102 according to the present invention. Furthermore, parts of a water recirculation shower system 100 as described in connection with Fig. 1 are illustrated in Figs. 5 and 6. Figs. 2 and 3 schematically illustrate perspective views of the device 102. Fig. 4 schematically illustrated a top view of the device 102. Figs. 5-6 schematically illustrate cross-sectional views of the device 102 along the dashed line 130 on Fig. 4.

The drain valve device 102 is configured for a drain 108 of a shower floor 106 of a water recirculation shower system 100 comprising a pump inlet 112 above the shower floor 106. The drain valve device 102 comprises an impeding part 132 and an overflow drain part 103.

The impeding part 132 is configured to be movable in relation to the drain 108 between: a closed position (in Figs. 3 and 6, the impeding part 132 is in the closed position), wherein a direct drain impediment 133 is formed below a drainage level being defined by a part 109 of the shower floor 106 next to the drain, and an open position (in Figs. 2 and 5, the impeding part 132 is in the open position), wherein the direct drain impediment is not formed.

The impeding part 132 comprises an impeding rim part. The impeding part 132 comprises an annular part, e.g. provided in a flexible seal material such as rubber or silicone.

The overflow drain part 103 comprises an outlet aperture 105 being configured to provide communication of water from the shower floor 106 to the drain 108 and being configured to be provided at an elevation of between 3 and 30 mm in relation to a pump suction inlet area 113 of the shower floor 106 when the impeding part 132 is in the closed position.

The drain valve device 102 comprises a base part 134 being configured to fit at an opening 137 of the drain 108. The impeding part 132 is moveably attached to the base part 134. The base part 134 is provided at least partly within the drain 108. Movement of the impeding part 132 between the closed position and the open position is push-actuateable. The drain valve device 102 comprises a movement mechanism 136 configured to allow translational movement of the impeding part 132 relative to the base part 134 upon push-activation of the impeding part 132. The impeding part 132 is activated and/or de-activated upon push-actuation of a top plate 138 of the device 102. Push-actuation of the top plate 138 may for instance be carried out using a foot. The top plate 138 defines the outlet aperture 105. The base part 134 comprises a base rim part 140 provided at the drainage level. The base rim part 140 comprises an upper surface 142 in level with the part 109 of the shower floor 106 being next to the drain 108. Accordingly, water may flow unhindered by the base rim part 140 from the drainage part 109 of the shower floor 106 and towards the drain 108.

Communication from the shower floor 106 to the drain 108 is provided under the impeding part 132 when the impeding part 132 is in the open position. Accordingly, the drain valve device 102 is configured such that water from the shower floor 106 may flow under the impeding part 132 and into the drain 108 when the impeding part 132 is in the open position.

When the impeding part 132 is in the open position, communication from the shower floor 106 to the drain 108 is provided between the impeding part 132 and the base part 134 of the drain valve device 102.

The impeding part 132 and the overflow drain part 103 are rigidly connected to each other.

The overflow drain part 103 is configured to drain at least 2 L, such as up to 15L or more, of water per minute from the shower floor 106.

The impeding part 132 is provided as an impeding rim part. The impeding part 132 comprises of flexible and/or elastic material such as rubber or silicone. Accordingly, a distal edge 135 is deformed when forming the direct drain impediment 133.

The base rim part 140 is illustrated as a square. However, an embodiment according to the present invention may be configured to fit any shapes and sizes of drains and drain openings.

The drain valve device 102 is fixed to the drain 108.

The drain valve device 102 is configured such that the movement mechanism 136 is extended when the impeding part 132 is in the open position and compressed when the impeding part 132 is in the closed position. The overflow drain part 103 is in an elevated/raised position when the movement mechanism 136 is extended and in a lowered position when movement mechanism 136 is compressed. The overflow drain part 103 is in an elevated/raised position when the impeding part 132 is in the open position. The overflow drain part 103 is in a lowered position when the impeding part 132 is in the closed position.

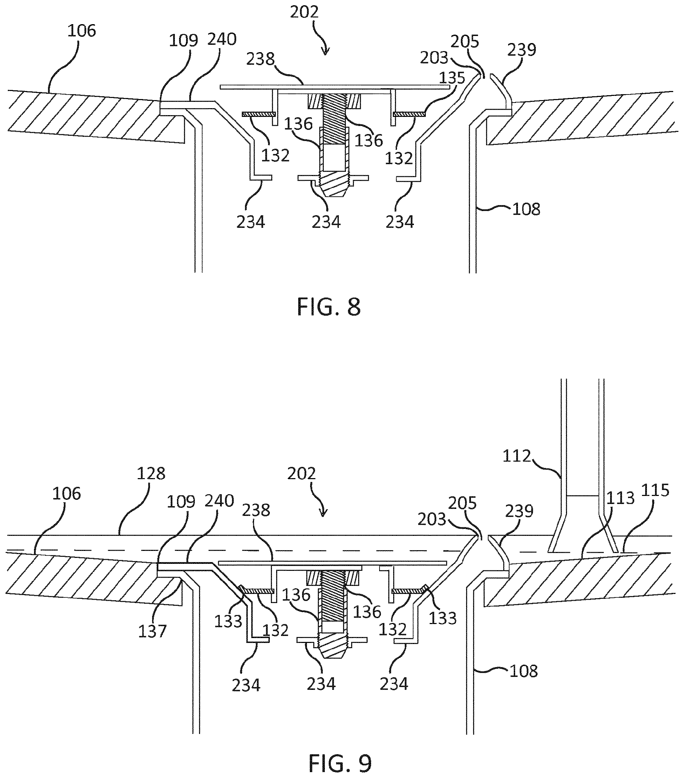

Figs. 7-9 schematically illustrate a second embodiment of a drain valve device 202 according to the present invention. Furthermore, parts of a water recirculation shower system 100 are illustrated in Figs 8 and 9. The second embodiment comprises elements being similar to what is illustrated in Figs. 2-6. Furthermore, parts of the illustrated water recirculation shower system in Figs. 8 and 9 are identical to those parts of Figs. 5 and 6. Accordingly, only or mainly the differentiating parts of the second embodiment are described in the following.

Figs. 8-9 schematically illustrate cross-sectional views of the device 202 along the dashed line 130 on Fig. 7.

The drain valve device 202 is for a drain 108 of a shower floor 106 of a water recirculation shower system comprising a pump inlet 112 above the shower floor 106. The drain valve device 202 comprises an impeding part 132 and an overflow drain part 203. The impeding part 132 may be made of rubber.

The impeding part 132 is configured to be movable in relation to the drain 108 between: a closed position (cf. Fig. 9) and an open position (cf. Fig. 8). For the closed position a direct drain impediment 133 is formed below a drainage level. The drainage level is defined by a part 109 of the shower floor 106 next to the drain 108. For the open position the direct drain impediment is not formed.

The overflow drain part 203 comprises one or more outlet apertures 205 being configured to provide communication from the shower floor to the drain 108. The one or more outlet apertures 205 are configured to be provided at an elevation of between 3 and 30 mm in relation to a pump suction inlet area 113 of the shower floor 106 when the impeding part is in the closed position. The elevation of the one or more outlet apertures 205 are at a predefined level if the drain valve device 202 is fixed to the drain 108. The drain valve device 202 is configured such that the one or more outlet apertures 205 are provided at a predetermined and fixed elevation, i.e. the elevation is the same when the impeding part 132 is in the closed position (cf. Fig. 9) as when the impeding part 132 is in the open position (cf. Fig. 8).

The impeding part 132 and the overflow drain part 203 are not rigidly connected to each other. The impeding part 132 and the overflow drain part 203 are moveably connected to each other, via the base part 234, such that the overflow drain part 203 is rigidly connected to the base part 234.

The impeding part 132 is activated and de-activated upon push-actuation of a top plate 238 of the device 202. Push-actuation of the top plate 238 may for instance be carried out using a foot. A second top plate 239 defines the outlet aperture 105 of the drain part 103. The second top plate 239 may be formed in one piece with the rim part 240.

The drain valve device 202 is fixed to the drain 108.

The drain valve device 202 is configured such that the movement mechanism 136 is extended when the impeding part 132 is in the open position and compressed when the impeding part 132 is in the closed position. The overflow drain part 203 is in a fixed elevated position irrespectively of the position of the movement mechanism 136 and the impeding part 132.

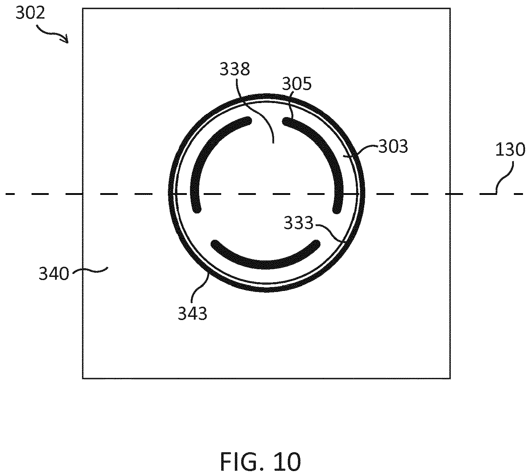

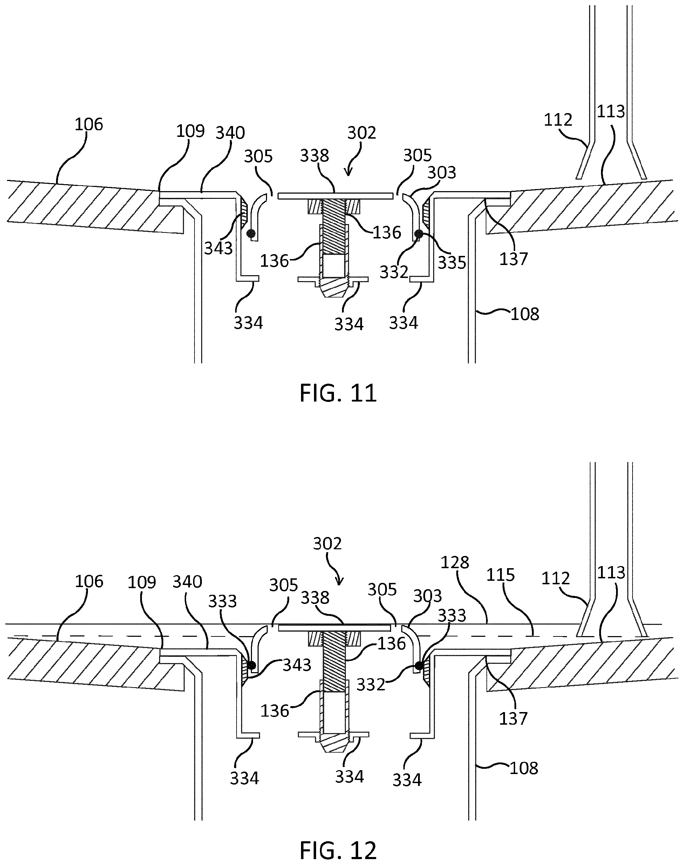

Figs. 10-12 schematically illustrate a third embodiment of a drain valve device 302 according to the present invention. Furthermore, parts of a water recirculation shower system, which parts are similar to parts of the system 100, are illustrated in Figs. 11 and 12. The third embodiment comprises elements being similar to what is illustrated in Figs. 2-6 and/or Figs. 7-9. Accordingly, only or mainly the differentiating parts of the third embodiment are described in the following.

Fig. 10 schematically illustrates a top view of the drain valve device 302.

Figs. 11-12 schematically illustrate cross-sectional views of the drain valve device 302 along the line 130 (cf. Fig. 10) for different positions of an impeding part 332.

The drain valve device 302 is for a drain 108 of a shower floor 106 of a water recirculation shower system comprising a pump inlet 112 above the shower floor 106. The drain valve device 302 comprises the impeding part 332 and an overflow drain part 303. The impeding part 332 comprises an O-ring made of rubber. The impeding part 332 is rigidly connected to the overflow drain part 303.

The impeding part 332 is configured to be movable in relation to the drain between: a closed position (cf. Fig. 12) and an open position (cf. Fig. 11). For the closed position a direct drain impediment is formed at a drainage level. The drainage level is defined by a part 109 of the shower floor 106 next to the drain 108. For the open position the direct drain impediment is not formed.

When the impeding part 332 is in the open position, communication from the shower floor 106 to the drain 108 is provided between the impeding part 332 and the part 343 of the base part 334 of the drain valve device 302.

The overflow drain part 303 comprises one or more outlet apertures 305 being configured to provide communication from the shower floor to the drain 108. The one or more outlet apertures 305 are configured to be provided at an elevation of between 3 and 30 mm in relation to a pump suction inlet area 113 of the shower floor 106 when the impeding part is in the closed position.

When in the closed position (cf. Fig. 12) the impeding part 332 provides a seal towards the drain by a rim part of the drain valve device 302. The rim part of the drain valve device is provided by the O-ring.

A substantially cylindrical section of the base part 334 comprises an annular protrusion 343. In an embodiment, the annular protrusion may be formed by a coarctation of an otherwise cylindrical wall section of the base part. The inner diameter at the annular protrusion is slightly smaller, such as less than 1 % smaller than the outer diameter of the O-ring 332. The inner diameter of the cylindrical section of the base part 334 immediately below the annular protrusion 343 is larger, such as more than 3 % larger than the outer diameter of the O-ring 332. Furthermore, the drain valve device 302 is configured such that the O-ring is in level with the annular protrusion 343 when the movement mechanism 136 is extended and such that the O-ring is below the annular protrusion 343 when the movement mechanism 136 is compressed. Accordingly, when the movement mechanism 136 is extended, cf. Fig. 12, a direct drain impediment 333 is formed by the O-ring being wedged within the annular protrusion 343, i.e. the impeding part is in the closed position. When the movement mechanism 136 is compressed, cf. Fig. 11, the direct drain impediment (ref. 333 of Fig. 12) is not formed and water may enter the drain between the O-ring 332 and the annular protrusion 343.

To improve ergonomics for the feet and reduce the risk of tripping over the overflow drain part, such as the part 303, it may be an advantage that any one or more parts of the drain valve device, which one or more parts may protrude from the level of the shower floor at the drain, may form a large radius fillet/bevel or a flat top dome to make it seem smooth and seamless against a foot. Alternatively, such protruding parts may be shaped asymmetrically in a similar way to the top plate 138 in Figs. 2-6.

The drain valve device 302 is fixed to the drain 108.

The drain valve device 302 is configured such that the movement mechanism 136 is extended when the impeding part 332 is in the closed position and compressed when the impeding part 332 is in the open position. The overflow drain part 303 is in an elevated/raised position when the movement mechanism 136 is extended and in a lowered position when movement mechanism 136 is compressed. The overflow drain part 303 is in an elevated/raised position when the impeding part 332 is in the closed position. The overflow drain part 303 is in a lowered position when the impeding part 332 is in the open position.

Fig. 13 schematically illustrates the pump inlet 112 as described in connection with any of the Figs. 1, 6, 9, 11, or 12. Furthermore, a water sensor 117 (e.g. a capacitive sensor) is illustrated. The water sensor 117 may form part of a water recirculation shower system comprising any of the drain vale device: 102, 202, or 302. The water sensor 117 may be fixed to the pump inlet 112, e.g. via frame (not illustrated). The water sensor 117 is configured to be activated when the surface of the water reaches the level 119, which is slightly above, such as 1 mm or 3 mm above, the level 115. Having the level 119 being slightly above the level 115 may be to mitigate the risk that any disturbance/movement/fluctuations of the surface of the water 128, e.g. caused by movement of a foot of the user or the shower's water spray, may cause that the pump inlet 112 may take in air, which may cause disturbing noises. The level 129 refers to highest possible water level, which is defined by the level of the one or more outlet apertures 105, 205, 305 (cf. Figs. 1-12).

Furthermore, Fig. 13 illustrates a wall section 107 of the shower space.

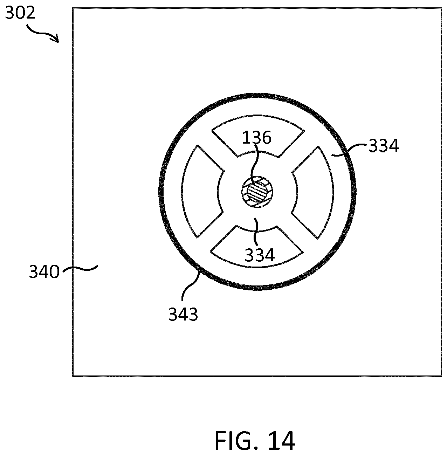

Fig. 14 illustrates a top view of the drain valve device 302 wherein the overflow drain part 303, including the top plate 338, is removed. The overflow drain part 303 may be assembled with another part of the drain valve device 302 e.g. by a threading of the overflow drain part engaging a corresponding threading of the movement mechanism 136.

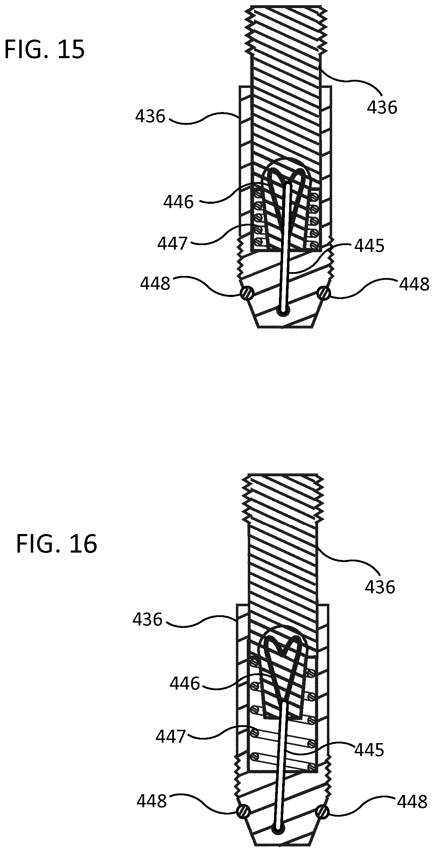

Figs. 15-16 schematically illustrate an example of a movement mechanism 436, which may form part of any of the movement mechanism 136 of any of the embodiments 102, 202, and 302. The movement mechanism 436 comprises a pin part 445 and is configured such that the pin part 445 may follow a track 446 having an elongated "heart"-like shape. A spring 447 provides tension to the movable top part of 436 upwards, while the pin 445 locks in either a top or bottom position until the top part of 436 is pushed down again. A locking ring 448 locks the pin part 445 into the track 446.

Accordingly, the stable compressed and extended positions, respectively, may be entered by the movement mechanism 436 by means of the "push down pop-up movement". The "push down pop-up" movement mechanism according to the present invention may alternatively or additionally be provided / operate in other ways using one or more springs, such as similarly to the disclosure US3428295A or such solutions as known from a retractable pen, i.e. comprising one or more springs for provision of tension and a locking mechanism for locking the movement mechanism in the compressed state.

The movement mechanism 436 and/or any movement mechanism according to the present description may be provided and/or operated as disclosed in any one or more of the following examples: https://youtu.be/ORYjsJxwo3M?t=2m40s which illustrates the functionality of a push-button basin stopper, and: https://youtu.be/Dza2G911ByE?t=42s which illustrates the functionality of a popup drain, and: https://www.youtube.com/watch?v=UzRI1N9c7eU.

It is clear that e.g. surface tension may render that e.g. the level of water, such as the level 128, needs to be at a certain level above the outlet aperture in order to enter the drain.

Furthermore, due to the fact that a shower floor usually is continuously showered with water from the shower head during use, and since the person taking the shower may move, the effect of surface tension may be cancelled out at least to some degree due to motion of the water in the temporary water reservoir provided by the present invention.

The specification and drawings are to be regarded in an illustrative rather than restrictive sense.

It should be emphasized that the term "comprises/comprising" when used in the present disclosure is taken to specify the presence of stated features, integers, steps or components but does not preclude the presence or addition of one or more other features, integers, steps, components or groups thereof.

## Claims

1. A drain valve device (102, 202, 302) for a drain (108) of a shower floor (106) of a water recirculation shower system (100) comprising a pump inlet (112) above the shower floor (106), the drain valve device (102, 202, 302) comprising:
- an impeding part (132, 332) configured to be movable in relation to the drain (108) between: a closed position, wherein a direct drain impediment (133, 333) is formed at or below a drainage level being defined by a part (109) of the shower floor (106) next to the drain (108), and an open position, wherein the direct drain impediment is not formed;
- an overflow drain part (103, 203, 303) comprising one or more outlet apertures (105, 205, 305) being configured to provide communication from the shower floor (106) to the drain (108), the one or more outlet apertures (105, 205, 305) being configured to be provided at an elevation of between 3 and 30 mm in relation to a pump suction inlet area (113) of the shower floor (106) when the impeding part (132, 332) is in the closed position; and
- a base part (134, 234, 334) configured to fit at an opening (137) of the drain (108);
wherein the impeding part (132, 332) being moveably attached to the base part (134, 234, 334),
**characterised in that**
the drain valve device (102, 202, 302) is configured to provide communication from the shower floor (106) to the drain (108) between the impeding part (132, 332) and the base part (134, 234, 334) when the impeding part (132, 332) is in the open position.

2. A drain valve device (102, 202, 302) according to claim 1, wherein the one or more outlet apertures are configured to be provided at an elevation of a predefined level when the impeding part (132, 332) is in the closed position.

3. A drain valve device (102, 202, 302) according to any of the preceding claims, wherein movement of the impeding part (132, 332) between the closed position and the open position is push-actuateable.

4. A drain valve device (102, 202, 302) according to any of the preceding claims, wherein the base part (134, 234, 334) comprises a base rim part (140) configured to be provided at the drainage level.

5. A drain valve device (102, 202, 302) according to any of the preceding claims, wherein communication from the shower floor (106) to the drain (108) is provided under the impeding part (132, 332) when the impeding part (132, 332) is in the open position.

6. A drain valve device (102, 202, 302) according to any of the preceding claims, wherein the impeding part (132, 332) and the overflow drain part (103, 203, 303) are rigidly connected to each other.

7. A drain valve device (102, 202, 302) according to any of the claims 1-5, wherein the impeding part (132, 332) and the overflow drain part (103, 203, 303) are moveably connected to each other.

8. A drain valve device (102, 202, 302) according to any of the preceding claims, wherein the overflow drain part (103, 203, 303) is configured to drain at least 2 L water per minute from the shower floor (106).

9. A drain valve device (102, 202, 302) according to any of the preceding claims, wherein the impeding part (132, 332) is provided as an impeding rim part.

10. Use of a drain valve device (102, 202, 302) according to any of the preceding claims and a shower floor (106) for provision of a temporary low level water reservoir.

11. A water recirculation shower system (100) comprising:
- a drain valve device (102, 202, 302) according to any of the claims 1-9, and
- a water recirculation shower unit (104) comprising a pump inlet (112) at the pump suction inlet area (113) of the shower floor (106).

12. A water recirculation shower system (100) according to claim 11, comprising a water sensor (117) configured to detect whether a level of water (128) has reached a desired level for the pump inlet (112) to operate as desired, wherein the water recirculation shower system (100) is configured for initiating recirculation by means of the water sensor (117).

13. A method for controlling water level (128) of a shower floor (106) of a water recirculation shower system (100) comprising a pump inlet (112) above the shower floor (106), the method comprising impeding water from entering the drain (108) by means of an impeding part (132, 332) of a drain valve device (102, 202, 302), such that the water level (128) is forced to raise in order for the water to enter the drain (108) via an overflow drain part (103, 203, 303) of the drain valve device (102, 202, 302),
**characterised in that**
the overflow drain part (103, 203, 303) is provided at an elevation of between 3 and 30 mm in relation to a pump suction inlet area (113) of the shower floor (106) when the impeding part (132, 332) is in a closed position,
and **in that** the method comprises moving the impeding part (132, 332) to an open position, wherein the impeding part (132, 332) is moveably attached to a base part (134, 234, 334) of the drain valve device (102, 202, 302), wherein the base part (134, 234, 334) is provided at an opening of the drain, and wherein communication from the shower floor (106) to the drain (108) is provided between the impeding part (132, 332) and the base part (134, 234, 334) when the impeding part (132, 332) is in the open position.

14. A method according to claim 13, wherein the drain valve device (102, 202, 302) is a drain valve device (102, 202, 302) according to any of the claims 1-9.

15. A method according to claim 13, wherein the water recirculation shower system (100) is a water recirculation shower system (100) according to claim 11 or 12.

## Patentansprüche

1. Ablaufventilvorrichtung (102, 202, 302) für einen Ablauf (108) eines Duschbodens (106) eines Duschsystems (100) mit Wasserrückführung, umfassend einen Pumpeneinlass (112) über dem Duschboden (106), wobei die Ablaufventilvorrichtung (102, 202, 302) Folgendes umfasst:
- ein Hindernisteil (132, 332), das so konfiguriert ist, dass es in Bezug auf den Ablauf (108) beweglich ist zwischen: einer geschlossenen Position, in der ein direktes Ablaufhindernis (133, 333) auf oder unter einem Ablaufniveau gebildet wird, das durch ein Teil (109) des Duschbodens (106) neben dem Ablauf (108) definiert ist, und einer offenen Position, in der das direkte Ablaufhindernis nicht gebildet wird;
- ein Überlaufteil (103, 203, 303), das eine oder mehrere Auslassaussparungen (105, 205, 305) umfasst, die so konfiguriert sind, dass sie eine Verbindung von dem Duschboden (106) zu dem Ablauf (108) bereitstellen, wobei die eine oder mehreren Auslassaussparungen (105, 205, 305) so konfiguriert sind, dass sie auf einer Höhe von zwischen 3 und 30 mm in Bezug auf einen Pumpenansaugeinlassbereich (113) des Duschbodens (106) bereitgestellt werden, wenn das Hindernisteil (132, 332) sich in der geschlossenen Position befindet; und
- ein Basisteil (134, 234, 334), das so konfiguriert ist, dass es in eine Öffnung (137) des Ablaufs (108) passt; wobei das Hindernisteil (132, 332) beweglich an dem Basisteil (134, 234, 334) angebracht ist,
**dadurch gekennzeichnet, dass**
die Ablaufventilvorrichtung (102, 202, 302) so konfiguriert ist, dass sie eine Verbindung von dem Duschboden (106) zu dem Ablauf (108) zwischen dem Hindernisteil (132, 332) und dem Basisteil (134, 234, 334) bereitstellt, wenn das Hindernisteil (132, 332) sich in der offenen Position befindet.

2. Ablaufventilvorrichtung (102, 202, 302) nach Anspruch 1, wobei die eine oder mehreren Auslassaussparungen so konfiguriert sind, dass sie auf einer Höhe eines vordefinierten Niveaus bereitgestellt werden, wenn das Hindernisteil (132, 332) sich in der geschlossenen Position befindet.

3. Ablaufventilvorrichtung (102, 202, 302) nach einem der vorstehenden Ansprüche, wobei eine Bewegung des Hindernisteils (132, 332) zwischen der geschlossenen Position und der offenen Position durch Drücken ausgelöst werden kann.

4. Ablaufventilvorrichtung (102, 202, 302) nach einem der vorstehenden Ansprüche, wobei das Basisteil (134, 234, 334) ein Basisrandteil (140) umfasst, das so konfiguriert ist, dass es auf dem Ablaufniveau bereitgestellt wird.

5. Ablaufventilvorrichtung (102, 202, 302) nach einem der vorstehenden Ansprüche, wobei eine Verbindung von dem Duschboden (106) zu dem Ablauf (108) unter dem Hindernisteil (132, 332) bereitgestellt wird, wenn das Hindernisteil (132, 332) sich in der offenen Position befindet.

6. Ablaufventilvorrichtung (102, 202, 302) nach einem der vorstehenden Ansprüche, wobei das Hindernisteil (132, 332) und das Überlaufteil (103, 203, 303) starr miteinander verbunden sind.

7. Ablaufventilvorrichtung (102, 202, 302) nach einem der Ansprüche 1-5, wobei das Hindernisteil (132, 332) und das Überlaufteil (103, 203, 303) beweglich miteinander verbunden sind.

8. Ablaufventilvorrichtung (102, 202, 302) nach einem der vorstehenden Ansprüche, wobei das Überlaufteil (103, 203, 303) so konfiguriert ist, dass es mindestens 2 I Wasser pro Minute von dem Duschboden (106) ablaufen lässt.

9. Ablaufventilvorrichtung (102, 202, 302) nach einem der vorstehenden Ansprüche, wobei das Hindernisteil (132, 332) als Hindernisrandteil bereitgestellt ist.

10. Verwendung einer Ablaufventilvorrichtung (102, 202, 302) nach einem der vorstehenden Ansprüche und eines Duschbodens (106) zum Bereitstellen eines Wasserbehälters mit vorübergehend niedrigem Niveau.

11. Duschsystem (100) mit Wasserrückführung, umfassend:
- eine Ablaufventilvorrichtung (102, 202, 302) nach einem der Ansprüche 1-9, und
- eine Duscheinheit (104) mit Wasserrückführung, die einen Pumpeneinlass (112) am Pumpenansaugeinlassbereich (113) des Duschbodens (106) umfasst.

12. Duschsystem (100) mit Wasserrückführung nach Anspruch 11, umfassend einen Wassersensor (117), der so konfiguriert ist, dass er erfasst, ob ein Wasserniveau (128) ein gewünschtes Niveau erreicht hat, damit der Pumpeneinlass (112) wie gewünscht betrieben werden kann, wobei das Duschsystem (100) mit Wasserrückführung zum Einleiten der Rückführung mittels des Wassersensors (117) konfiguriert ist.

13. Verfahren zum Steuern des Wasserniveaus (128) eines Duschbodens (106) eines Duschsystems (100) mit Wasserrückführung, das einen Pumpeneinlass (112) über dem Duschboden (106) umfasst, wobei das Verfahren umfasst, dass Wasser mittels eines Hindernisteils (132, 332) einer Ablaufventilvorrichtung (102, 202, 302) daran gehindert wird, in den Ablauf (108) einzutreten, so dass das Wasserniveau (128) gezwungen wird, anzusteigen, damit das Wasser über ein Überlaufteil (103, 203, 303) der Ablaufventileinrichtung (102, 202, 302) in den Ablauf (108) eintritt,
**dadurch gekennzeichnet, dass**
das Überlaufteil (103, 203, 303) auf einer Höhe von zwischen 3 und 30 mm in Bezug auf einen Pumpenansaugeinlassbereich (113) des Duschbodens (106) bereitgestellt wird, wenn das Hindernisteil (132, 332) sich in einer geschlossenen Position befindet,
und dadurch, dass das Verfahren das Bewegen des Hindernisteils (132, 332) in eine offene Position umfasst, in der das Hindernisteil (132, 332) beweglich an einem Basisteil (134, 234, 334) der Ablaufventilvorrichtung (102, 202, 302) angebracht ist, wobei das Basisteil (134, 234, 334) an einer Öffnung des Ablaufs bereitgestellt wird, und wobei eine Verbindung von dem Duschboden (106) zu dem Ablauf (108) zwischen dem Hindernisteil (132, 332) und dem Basisteil (134, 234, 334) bereitgestellt wird, wenn das Hindernisteil (132, 332) sich in der offenen Position befindet.

14. Verfahren nach Anspruch 13, wobei die Ablaufventilvorrichtung (102, 202, 302) eine Ablaufventilvorrichtung (102, 202, 302) nach einem der Ansprüche 1-9 ist.

15. Verfahren nach Anspruch 13, wobei das Duschsystem mit Wasserrückführung (100) ein Duschsystem mit Wasserrückführung (100) nach Anspruch 11 oder 12 ist.

## Revendications

1. Dispositif de vanne de vidange (102, 202, 302) pour un drain (108) d'un plancher de douche (106) d'un système de douche à recirculation d'eau (100) comprenant une entrée de pompe (112) au-dessus du plancher de douche (106), le dispositif de vanne de vidange (102, 202, 302) comprenant :
- une partie d'obstruction (132, 332) configurée pour être mobile par rapport au drain (108) entre : une position fermée, dans laquelle un obstacle à la vidange directe (133, 333) est formé au niveau ou en dessous d'un niveau de vidange défini par une partie (109) du plancher de douche (106) à côté du drain (108), et une position ouverte, dans laquelle l'obstacle à la vidange directe n'est pas formé ;
- une partie drain de trop-plein (103, 203, 303) comprenant une ou plusieurs ouvertures de sortie (105, 205, 305) qui sont configurées pour permettre une communication du plancher de douche (106) vers le drain (108), la une ou plusieurs ouvertures de sortie (105, 205, 305) étant configurées pour être disposées à une élévation comprise entre 3 et 30 mm par rapport à une zone d'entrée d'aspiration de pompe (113) du plancher de douche (106) lorsque la partie d'obstruction (132, 332) est dans la position fermée ; et
- une partie base (134, 234, 334) configurée pour s'adapter à une ouverture (137) du drain (108) ; dans lequel la partie d'obstruction (132, 332) est fixée de façon mobile à la partie base (134, 234, 334),
**caractérisé en ce que**
le dispositif de vanne de vidange (102, 202, 302) est configuré pour permettre une communication du plancher de douche (106) vers le drain (108) entre la partie d'obstruction (132, 332) et la partie base (134, 234, 334) lorsque la partie d'obstruction (132, 332) est dans la position ouverte.

2. Dispositif de vanne de vidange (102, 202, 302) selon la revendication 1, dans lequel la ou les ouvertures de sortie sont configurées pour être disposées à une élévation d'un niveau prédéfini lorsque la partie d'obstruction (132, 332) est dans la position fermée.

3. Dispositif de vanne de vidange (102, 202, 302) selon l'une quelconque des revendications précédentes, dans lequel le mouvement de la partie d'obstruction (132, 332) entre la position fermée et la position ouverte est actionnable par poussée.

4. Dispositif de vanne de vidange (102, 202, 302) selon l'une quelconque des revendications précédentes, dans lequel la partie base (134, 234, 334) comprend une partie rebord de base (140) configurée pour être disposée au niveau de la vidange.

5. Dispositif de vanne de vidange (102, 202, 302) selon l'une quelconque des revendications précédentes, dans lequel une communication du plancher de douche (106) vers le drain (108) est prévue sous la partie d'obstruction (132, 332) lorsque la partie d'obstruction (132, 332) est dans la position ouverte.

6. Dispositif de vanne de vidange (102, 202, 302) selon l'une quelconque des revendications précédentes, dans lequel la partie d'obstruction (132, 332) et la partie drain de trop-plein (103, 203, 303) sont reliées rigidement l'une à l'autre.

7. Dispositif de vanne de vidange (102, 202, 302) selon l'une quelconque des revendications 1-5, dans lequel la partie d'obstruction (132, 332) et la partie drain de trop-plein (103, 203, 303) sont reliées de manière mobile l'une à l'autre.

8. Dispositif de vanne de vidange (102, 202, 302) selon l'une quelconque des revendications précédentes, dans lequel la partie drain de trop-plein (103, 203, 303) est configurée pour vidanger au moins 2 L d'eau par minute du plancher de douche (106).

9. Dispositif de vanne de vidange (102, 202, 302) selon l'une quelconque des revendications précédentes, dans lequel la partie d'obstruction (132, 332) est prévue comme une partie rebord d'obstruction.

10. Utilisation d'un dispositif de vanne de vidange (102, 202, 302) selon l'une quelconque des revendications précédentes et d'un plancher de douche (106) pour la fourniture d'un réservoir d'eau temporaire à bas niveau.

11. Système de douche à recirculation d'eau (100) comprenant :
- un dispositif de vanne de vidange (102, 202, 302) selon l'une quelconque des revendications 1-9, et
- une unité de douche à recirculation d'eau (104) comprenant une entrée de pompe (112) au niveau de la zone d'entrée d'aspiration de pompe (113) du plancher de douche (106).

12. Système de douche à recirculation d'eau (100) selon la revendication 11, comprenant un capteur d'eau (117) configuré pour détecter si un niveau d'eau (128) a atteint un niveau souhaité pour que l'entrée de pompe (112) fonctionne comme souhaité, dans lequel le système de douche à recirculation d'eau (100) est configuré pour déclencher la recirculation au moyen du capteur d'eau (117).

13. Procédé de commande de niveau d'eau (128) d'un plancher de douche (106) d'un système de douche à recirculation d'eau (100) comprenant une entrée de pompe (112) au-dessus du plancher de douche (106), le procédé comprenant le fait d'empêcher l'eau d'entrer dans le drain (108) au moyen d'une partie d'obstruction (132, 332) d'un dispositif de vanne de vidange (102, 202, 302), de sorte que le niveau d'eau (128) est forcé de monter pour que l'eau pénètre dans le drain (108) par le biais d'une partie drain de trop-plein (103, 203, 303) du dispositif de vanne de vidange (102, 202, 302),
**caractérisé en ce que**
la partie drain de trop-plein (103, 203, 303) est disposée à une élévation comprise entre 3 et 30 mm par rapport à une zone d'entrée d'aspiration de pompe (113) du plancher de douche (106) lorsque la partie d'obstruction (132, 332) est dans une position fermée,
et **en ce que** le procédé comprend le déplacement de la partie d'obstruction (132, 332) vers une position ouverte, dans lequel la partie d'obstruction (132, 332) est fixée de manière mobile à une partie base (134, 234, 334) du dispositif de vanne de vidange (102, 202, 302), dans lequel la partie base (134, 234, 334) est disposée au niveau d'une ouverture du drain, et dans lequel une communication du plancher de douche (106) vers le drain (108) est assurée entre la partie d'obstruction (132, 332) et la partie base (134, 234, 334) lorsque la partie d'obstruction (132, 332) est dans la position ouverte.

14. Procédé selon la revendication 13, dans lequel le dispositif de vanne de vidange (102, 202, 302) est un dispositif de vanne de vidange (102, 202, 302) selon l'une quelconque des revendications 1-9.

15. Procédé selon la revendication 13, dans lequel le système de douche à recirculation d'eau (100) est un système de douche à recirculation d'eau (100) selon la revendication 11 ou 12.
